# EUROPEAN PATENT SPECIFICATION

(11) **EP 3 573 314 B1**
(45) Date of publication and mention of the grant of the patent: **30.04.2025**
(21) Application number: 19176713.6
(22) Date of filing: 27.05.2019
(51) Int. Cl.: H04L 12/28, H04L 41/0806

(54) **WIRELESSLY CONFIGURABLE AND NETWORKED SYSTEM FOR BUILDING AUTOMATION**
DRAHTLOS KONFIGURIERBARES UND VERNETZTES SYSTEM FÜR GEBÄUDEAUTOMATION
SYSTÈME CONFIGURABLE SANS FIL ET EN RÉSEAU D'AUTOMATISATION DE BÂTIMENTS

(30) Priority: 25.05.2018 US 201862676297 P
(43) Date of publication of application: 27.11.2019
(73) Proprietor: Schneider Electric Buildings Americas, Inc., Carrollton Texas 75006 (US)
(72) Inventor: MORLEY, Michael, Deerfield, NH 03037 (US); HAGHAYEGHI, Babak, Belmont, MA 02478 (US); SWEENEY, Kyle, Beverly, MA 01915 (US)
(74) Representative: Murgitroyd & Company

(56) References cited:
- US-A1- 2007 232 288
- US-A1- 2011 007 665
- US-A1- 2012 110 158
- US-A1- 2014 207 290

## Description

### TECHNICAL FIELD

The present disclosure provides a system for building automation. In particular, in some embodiments, the system for building automation may be wirelessly configurable and networked.

### BACKGROUND

Building-automation systems provide automated control over building systems. Building systems include, for example, heating, ventilation, and air conditioning (HVAC), plumbing, lighting, security, and audiovisual (AV) systems. By their automated nature, building-automation systems obviate the need for a human to constantly monitor and adjust each building-system component for desired operation. For example, an automated lighting-control system may turn off lights in a storage room of an office building if no occupancy is detected in the storage room for five consecutive minutes. This obviates the need for someone to constantly monitor occupancy of the storage room and flick a light switch off if no one enters the room for five minutes. Building-automation systems may also increase the precision of building systems. In the previous example, the automated lighting-control system turns off lights if no occupancy is detected in five consecutive minutes. In the absence of a lighting-control system, a human may be tasked with checking the storage room every hour to determine whether the lights should be turned off. In the former case, the lights would remain on for only five minutes. In this latter case, the lights may remain on for an entire hour before being turned off by a human.

A building's automation system may include multiple components (e.g., two, tens, hundreds, or thousands). These components may be, for example, one or more server, one or more controller, and one or more field device. Components may communicate with each other over a wireless and/or wired network.

At least some components (e.g., field devices) may be installed in the building having its systems automatically controlled. Installation may include configuring the components to communicate over a network. Installation may include configuring components to operate in accordance with their intended functionality. In the foregoing example of the storage room, this may include programming a lighting controller to turn off the lights in the storage room if an occupancy sensor detects no occupancy for five minutes. Document US2011/007665 discloses examples of prior art building automation methods and systems.

### SUMMARY

The invention discloses a wirelessly configurable and networked system according to the appended claim 1 and to a non-transitory computer-readable medium according to the appended claim 7. Further features are disclosed in the dependent claims.

Consistent with disclosed embodiments, a wirelessly configurable and networked first child device for building automation may comprise a processor and a radio-frequency (RF) circuit configured to receive an RF signal using a wireless-communication protocol. The RF circuit comprises an antenna. The first child device for building automation comprises a memory storing instructions that, when executed by the processor, cause the processor to: receive commissioning data via the RF circuit. The commissioning data is associated with the first child device; receive an identifier from a second child device, the identifier being associated with the child device; receive configuration data associated with the identifier and transmit the configuration data in response to receiving the identifier. The second child device operates based on at least the configuration data.

The configuration data may comprise network-configuration data. The configuration data may comprise a control application. The commissioning data may be associated with the system in a Building Information Management file. The wireless-communication protocol may comprise an RF-identification protocol. The system may comprise a building-automation controller. The second child device may comprise a building-automation controller. The identifier may comprise a serial number.

Consistent with disclosed embodiments, a wirelessly configurable and networked system for building automation may comprise a processor and a radio-frequency (RF) circuit configured to receive an RF signal using a wireless-communication protocol. The RF circuit may comprise an antenna. The system may comprise a memory storing instructions that, when executed by the processor, cause the processor to receive role data via the RF circuit, transmit the role data to a parent device, and receive configuration data in response to transmitting the role data. The configuration data may be associated with the role data. The system may operate based on at least the configuration data. The configuration data may comprise network-configuration data. The configuration data may comprise a control application. The role data may be associated with the system in a Building Information Management file. The wireless-communication protocol may comprise an RF-identification protocol. The system may comprise a building-automation controller. The parent device may comprise at least one of a server or a building-automation controller. The system may be a parent device.

Consistent with disclosed embodiments, a wirelessly configurable and networked system for building automation may comprise a processor and a radio-frequency (RF) circuit configured to receive an RF signal using a wireless-communication protocol. The RF circuit may comprise an antenna. The system may comprise a memory storing instructions that, when executed by the processor, cause the processor to receive network-configuration data via the RF circuit, establish a network connection to a parent device using the network-configuration data, and receive a control application over the network connection. The control application may be associated with the system. The system may operate based on at least the control application. The network-configuration data may be associated with the system in a Building Information Management file. The wireless-communication protocol may comprise an RF-identification protocol. The system may comprise a building-automation controller. The parent device may comprise at least one of a server or a building-automation controller. The system may be a parent device.

The foregoing general description and the following detailed description are exemplary and explanatory only and are not restrictive of the claims.

Other objects and features will be in part apparent and in part pointed out hereinafter.

### BRIEF DESCRIPTION OF THE DRAWINGS

Various aspects of at least one embodiment are discussed below with reference to the accompanying figures, which are not intended to be drawn to scale. The figures are included to provide illustration and a further understanding of the various aspects and embodiments and are incorporated in and constitute a part of this specification but are not intended as a definition of the limits of the invention. In the figures, each identical or nearly identical component that is illustrated in various figures is represented by a like numeral. For purposes of clarity, not every component may be labeled in every figure. In the figures:
FIG. 1 illustrates an exemplary system environment within which an exemplary wirelessly configurable and networked system for building automation may receive commissioning data.
FIG. 2 illustrates an exemplary RF device.
FIG. 3 illustrates an exemplary child device.
FIG. 4 illustrates an exemplary RF device displaying a user interface.
FIG. 5 is a flow chart illustrating an exemplary method for wirelessly configuring a networked system for building automation.

### DETAILED DESCRIPTION OF THE EMBODIMENTS

In view of the shortcomings of current systems and methods, improved systems and methods for providing the same are desired.

Commissioners of a building-automation system may seek to configure multiple components of the system. Current systems require components to be powered by a wired energy source to receive configuration data that is used to configure the components. Installers may therefore install components at their final locations before a commissioner configures them. Doing so may allow the components to be powered during commissioning via power sources electricians previously routed to these locations. This workflow, however, may be inefficient because it may require the commissioner to take time to walk to each component that needs to be configured. Because there may be hundreds or thousands of components, this may be very time consuming. This workflow may be inefficient because it may require the commissioner to wait for the electric routing to be completed in the building and the devices installed before component configuration may begin. Additionally, some components may be difficult or impossible to access or see when they are installed. An example of such component is an actuator controlling a damper within a duct located behind a finished wall. Construction may be undesirably delayed to accommodate commissioning of current systems.

To configure components, the commissioner may be required by current systems to transfer configuration data to each component. Because there may be hundreds or thousands of components, this may be a time-consuming process that is prone to user error. The commissioner may be required to select the correct network-configuration data and the correct control application for each device and manually initiate the transfer of the data and/or application. When configuring current systems, the commissioner may select the incorrect data and/or application because it may be difficult to keep track of associations between the large number of components that need configuring and the corresponding data/application. The commissioner may need to wait for one component to finish receiving its configuration data before transmitting other configuration data to another component.

As described in further detail herein, exemplary embodiments disclosed herein are directed to a wirelessly configurable and networked system for building automation. The system may be a component of a building-automation system. The component may have a radio-frequency (RF) circuit that receives commissioning data transmitted using a wireless-communication protocol (e.g., an RF identification (RFID) protocol). In this context, commissioning data may be, for example, network-configuration data and/or role data. Network-configuration data may at least partially specify network settings the component uses to communicate on a network. Role data may at least partially specify the intended use for component (e.g., a valve actuator, a lighting controller, or heating-system controller). Intended use may include the intended physical location in which the component is used and/or installed. The commissioning data may be transmitted to the RF circuit using a dedicated RFID writer or another device capable of performing this function (e.g., a smartphone). The commissioning data may be transmitted wirelessly to the component while it is in its original packaging or before it is installed in its final location. The signal from the RFID writer may be used to temporarily power the RF circuit so that it may receive and store the commissioning data. Once the component is commissioned, it may be installed and powered. When powered, the component may operate based on commissioning data previously transmitted to its RF circuit. For example, if network-configuration data was previously received, the component may use the network-configuration data to connect to a network or another component and receive a control application over the network or from the other component. The network-configuration data may specify the network location from which the control application may be received. The control application may at least partially specify how the component is to operate (e.g., how it is to perform its function). If role data was previously received, the component may use the role data to retrieve the control application associated with the intended use specified by the role data and/or network-configuration data.

Writing some forms of configuration data to a component over RFID may be impractical. RFID may transfer data slowly and the configuration data may be large (e.g., a control application may be large). It may take a long time to transfer configuration data over RFID. Additionally, memory storage that may be written to using RFID may be small. Accordingly, in some embodiments, configuration data may be transferred over another wireless-communication protocol. Because commissioning data may be relatively small in size, commissioning data may be written over RFID.

While a commissioner is described as configuring the components in the examples below, it is to be understood that other types of users may seek to configure the components (e.g., a manufacturer, installer, or end user).

Reference will now be made in detail to exemplary embodiments, examples of which are illustrated in the accompanying drawings and disclosed herein.

Examples of the methods and systems discussed herein are not limited in application to the details of construction and the arrangement of components set forth in the following description or illustrated in the accompanying drawings. The methods and systems are capable of implementation in other embodiments and of being practiced or of being carried out in various ways. Examples of specific implementations are provided herein for illustrative purposes only and are not intended to be limiting. In particular, acts, components, elements and features discussed in connection with any one or more examples are not intended to be excluded from a similar role in any other examples.

Also, the phraseology and terminology used herein is for the purpose of description and should not be regarded as limiting. Any references to examples, embodiments, components, elements or acts of the systems and methods herein referred to in the singular may also embrace embodiments including a plurality, and any references in plural to any embodiment, component, element or act herein may also embrace embodiments including only a singularity. References in the singular or plural form are not intended to limit the presently disclosed systems or methods, their components, acts, or elements. The use herein of "including," "comprising," "having," "containing," "involving," and variations thereof is meant to encompass the items listed thereafter and equivalents thereof as well as additional items. References to "or" may be construed as inclusive so that any terms described using "or" may indicate any of a single, more than one, and all of the described terms. In addition, in the event of inconsistent usages of terms between this document and documents incorporated herein by reference, the term usage in the incorporated references is supplementary to that of this document; for irreconcilable inconsistencies, the term usage in this document controls.

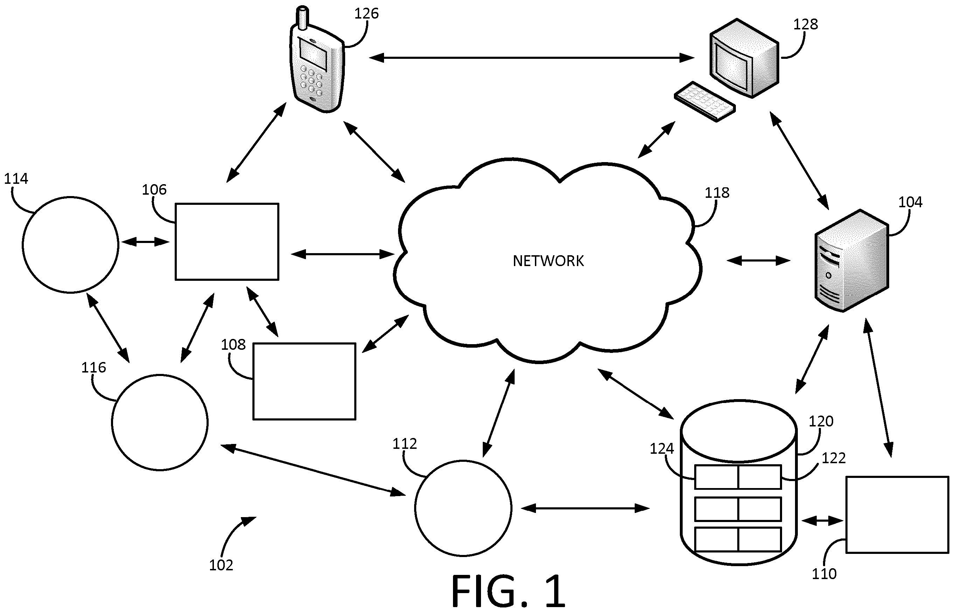

FIG. 1 is a diagram of an exemplary system environment 102 within which an exemplary wirelessly configurable and networked system for building automation may receive commissioning data. System environment 102 may include at least one server 104. System environment 102 may include one or more of at least one controller 106, at least one controller 108, or at least one controller 110. System environment 102 may include one or more of at least one field device 112, at least one field device 114, or at least one field device 116. In some embodiments, server 104; controller 106, controller 108, and controller 110; and field device 112, field device 114, and field device 116 may be other types of components of the building-automation system. In some embodiments, server 104; controller 106, controller 108, and controller 110; and field device 112, field device 114, and field device 116 may be another type of network node (e.g., a connection point that can receive and send data in a network). The network may be configured to hose network nodes unrelated to building automation. For illustrative purposes, controllers are represented as rectangles and field devices as circles in FIG. 1.

Controller 106 may be a system configured to control operation of field device 112, field device 114, and field device 116. Controller 106 may have inputs and/or outputs. Inputs may be used to receive data from field devices (e.g., field device 112). The data received at its inputs may be processed to generate instructions transmitted through the outputs. The instructions may at least partially specify how field devices (e.g., field device 112) are to operate. For example, controller 106 may be a lighting controller, field device 112 may be an occupancy sensor, and field device 112 may be an electric light switch. Controller 106 may receive, at its input, data from field device 112 indicating that there was no occupancy detected in a room for a predetermined amount of time (e.g., five minutes). Controller 106 may process the data in a manner specified by a control application. The control application may specify that controller 106 should determine that the lights in the room should be turned off if the amount of time since the last occupancy detection is greater than or equal to five minutes. In response to making this determination, controller 106 may output an instruction to field device 106 to turn off the lights in the room. In some embodiments, at least one input or output of controller 106 may be implemented in software. In this case, data may be received at and sent from controller 106 over a wireed and/or wireless network 118, to which controller 106 may be connected. Controller 106 may be connected directly or through network 118 to a field device (e.g., field device 112). Controller 106 may communicate directly or through network 118 with server 104 and/or database 120. The foregoing descriptions of controller 106 may apply equally to controllers 108, 110.

Field device 112 may be a system that senses environmental factors, provides mechanical motion, changes lighting conditions, or performs other tasks to facilitate building automation. For example, field device 112 may be a temperature sensor, humidity sensor, brightness sensor, air quality sensor, motion detector, occupancy sensor, light sensor, smoke detector, condensation monitor, leak detector, pressure controller, light switch, light dimmer, or actuator. Environmental factors may be, for example, temperature, humidity, brightness, air quality sensor, motion, occupancy, light, smoke, condensation, pressure. Field device 112 may receive instructions for operation generated by one or more controller (e.g., controller 106). In some embodiments, field device 112 may, at least partially, itself determine how to operate instead or in addition to relying on instructions generated by one or more controller (e.g., controller 106). Field device 112 may communicate directly or through network 118 with server 104 and/or database 120. The foregoing descriptions of field device 112 may apply equally to field devices 114, 116.

Server 104 may send configuration data to controllers (e.g., controller 106) and/or field devices (e.g., field device 112). Server 104 may do so over network 118 or through direct connections. Server 104 may send configuration data in response to receiving role data from a component of system environment 102. The configuration data sent may be associated with the role specified by the role data. For example, if controller 106 sends role data to server 104 indicating that controller 106 is a lighting controller, server 104 may send configuration data to controller 106 that is associated with the role of a lighting controller. The configuration data may be a control application that specifies, at least in part, how controller 106 should control field devices under its control (e.g., field device 112, field device 114, field device 116). For example, if field device 112 is an occupancy sensor and field device 114 is an electrical light switch, the control application may specify that controller 106 should instruct field device 112 to turn off lights when field device 114 indicates that no occupancy has been detected for five minutes. The control application may include digital representations of hardware (e.g., electrical inputs and electrical outputs), programs, preconfigured control algorithms, graphics, values, schedules, or logs containing historical information. In this context, the representation of electrical inputs may be readings of voltages, currents, resistances, and other electrical characteristics that may be used to determine the state of process elements. The representation of electrical output may be produced voltages, current, and modulated signals thereof to drive actuation of process elements. Programs may be, in some embodiments, user-customizable algorithms that determine output behavior based on inputs and other internal parameters and variables. Preconfigured control algorithms, in some embodiments, may be algorithms in which a user cannot edit basic logic but may modify the input and output variables of the algorithms. Scheduled may be time periods and values used to modify the behavior of control algorithms based on time, day, or other time-based events. The schedules may be user-customizable. Logs may be interval or chance-of-value process data maintained as a list of time-value pairings. Logs may be used for historical auditing of a process control. Graphics may be graphic data that gives a visual representation of the system to a user and allowing the user to change control parameters of the application. Values may be setpoints and other numerical or string data that provide and/or hold data pertinent to the control algorithms. The configuration data may include physical location information, indicating where controller 106 is located. In some embodiments, controller 106 may rely instead or in addition on GPS or wireless signal strength or timing to determine its physical location.

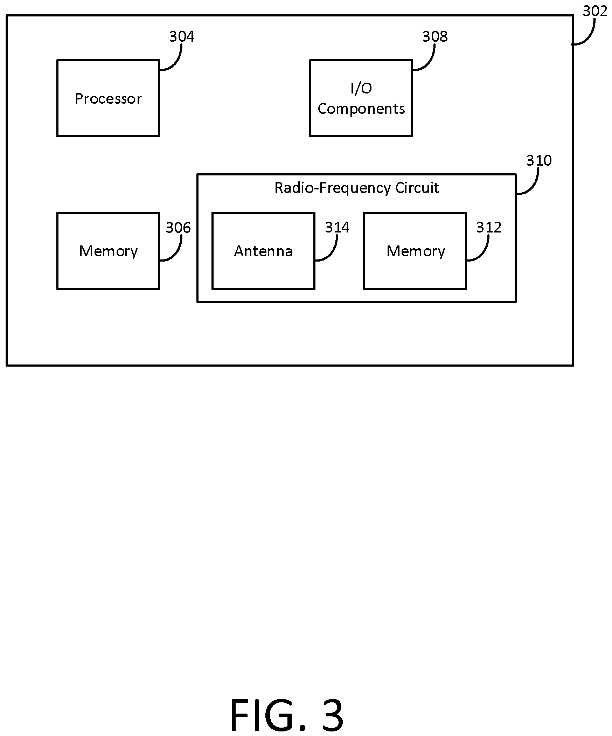

In this context, server 104 may be considered a parent device of controller 106 and controller 106 a child device of server 104 because server 104 sends the configuration data for use by controller 106. A component of system environment 102 may be both a parent device and a child device. For example, controller 106 may send configuration data associated with field device 112 to field device 112 and receive configuration data associated with controller 106 from server 104. Server 104 may provide controller 106 with the configuration data associated with field device 112. A child device may use commissioning data received via its RF circuit-discussed in more detail with respect to FIG. 3-to receive configuration data.

In some embodiments, a controller (e.g., controller 106) may serve as a parent to another controller (e.g., controller 108) by providing configuration data to the other controller. Similarly, in some embodiments, a controller (e.g., controller 106) may serve as a parent to a field device (e.g., field device 112) by providing configuration data to the field device. Similarly, in some embodiments, a field device (e.g., field device 112) may serve as a parent to another field device (e.g., field device 114) by providing configuration data to the other field device. A child device may provide role data or other commissioning data to the parent device and the parent device may provide the configuration data to the child device.

In some embodiments, a child device may provide an identifier instead or in addition to commissioning data. The identifier may be the child device's serial and/or model number. The identifier may be a custom-type ID instead or in addition to a serial and/or model number. The identifier may be stored in a memory of the child device during, for example, manufacturing. The configuration data transmitted by the parent device may be associated with the identifier.

In some embodiments, the configuration data sent to a child device may be network-configuration data. The network-configuration data may specify network parameters for the child device. The network-configuration data may be, for example, an IP address, a subnet mask, a gateway address, a dynamic-IP or static-IP status, a BACnet ID, register information, a device address, and ID, or a serial number. Network-configuration data may specify, at least in part, which components of system environment 102 the child device is to communicate with and how that communication should occur (e.g., IP addresses of the components). For example, the network-configuration data may specify, at least in part, that field device 112 should send data to controller 106 and follow the control instructions received from controller 106.

In some embodiments, a parent device may retrieve configuration data from database 120. Database 120 may store the configuration data 122 in association with associated data 124. Associated data 124 may be role data, an identifier, or another type of data.

A commissioner may use a radio-frequency device ("RF device 126")-such as an RFID reader/writer, smartphone, or barcode scanner-to write commissioning data to a child device. RF device 126 or another component may transmit an identifier of a child device over network 118 or directly to server 104. Server 104 may be running an application that uses the received identifier to retrieve commissioning data. For example, the application may access a memory storing the commissioning data in association with an identifier of the child device. In this context, the child device may be considered associated with the commissioning data. Server 104 may transmit the retrieved commissioning data and transmit it to RF device 126. In some embodiments, this may occur automatically. In some embodiments, a commissioner may manually connect RF device 126 to computer system 128, server 104, and/or database 120 and select the appropriate commissioning data to be transferred to RF device 126. RF device 126 may receive commissioning data and transmit it to the child device. RF device 126 may transmit commissioning data to the child device over a wireless-communication protocol (e.g., RFID). In some embodiments, the child device, after receiving commissioning data, may transmit a confirmation indicating that commissioning data was received by the child device. RF device 126 may supply power via electromagnetic induction to the child device. In some embodiments, RF device 126 may run the application for retrieving commissioning data from database 120. Database 120 may store the commissioning data in association with associated data 124. Associated data 124 may be role data, an identifier, or another type of data. Once the child device receives the commissioning data from RF device 126, the child device may receive the configuration data from a parent device.

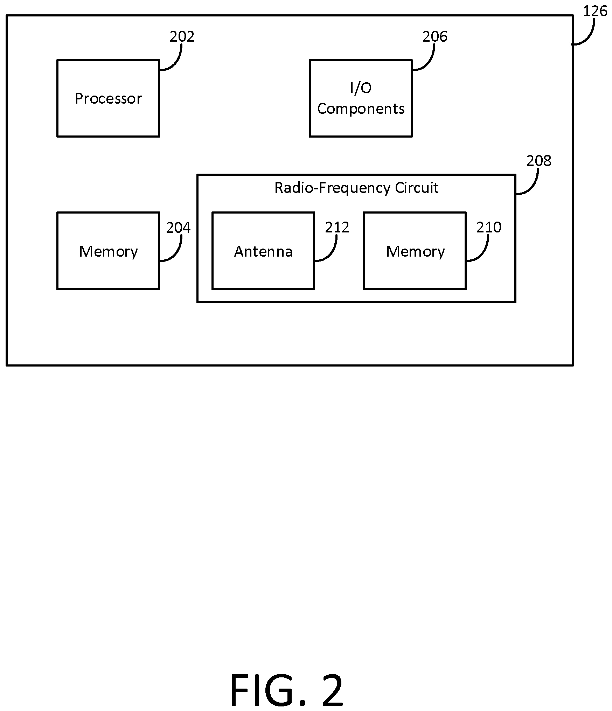

The radio-frequency circuit of the child device, discussed in more detail below with respect to FIG. 2, may be powered wirelessly using, for example, electromagnetic induction. The transferred energy may be used to read a memory of the child device that stores instructions that, when executed by a processor, cause the child device to confirm that received commissioning data is associated with the child device or the child device's role. The child device may parse commissioning data to extract an identifier (e.g., a serial number) and compare it with a second identifier, which may be stored on a memory of the child device. In the event of a match, the child device may transmit a confirmation indicating that the identifier transmitted as a portion of commissioning data matches the identifier stored on the memory of the child device. RF device 126 may receive this confirmation.

RF device 126 may transmit an identifier to computer system 128 and receive commissioning data from computer system 128. Some processes described with respect to RF device 126 may be performed by computer system 128 in conjunction with RF device 126. RF device 126 may communicate with computer system 128, server 104, and/or database 120 directly or over network 118. Components in system environment 102 may communicate with other components in system environment 102 directly or over network 118.

System components in FIG. 1 may be arranged as desired. Network 118 may be a wired and/or wireless network that uses, for example, physical and/or wireless data links to carry network data among (or between) network components. Network 118 may support voice, push-to-talk (PTT), broadcast video, and/or network data communications by network components. Wireless network protocols can include, for example, MBMS, CDMA, 1xRTT, GSM, UMTS, HSPA, EV-DO, EV-DO rev. A, 3GPP LTE, WiMAX, etc. Wired network protocols can include, for example, Ethernet, Fast Ethernet, Gigabit Ethernet, Local Talk (such as Carrier Sense Multiple Access with collision Avoidance), Token Ring, FDDI, ATM, etc.

FIG. 2 is a diagram of an exemplary RF device 126. RF device 126 may comprise one or more processor 202, one or more memory 204, input/output components 206, and one or more radio-frequency circuit 208. Radio-frequency circuit 208 may comprise a memory (e.g., a non-volatile memory 210). Radio-frequency circuit 208 may comprise one or more antenna 212. Input/output components 206 may comprise a camera or other optical device. Input/output components 206 may comprise a touchscreen display and/or trigger for initiating the reception or transmission of data. Input/output components 206 may permit the operation or configuration of RF device 126 by a user. Input/output components 206 may comprise a wireless network interface, serial bus connector, and/or modem. Radio-frequency circuit 208 may be a circuit configured to receive and/or transmit data over a wireless-communication protocol such as an RFID protocol. Radio-frequency circuit 208 may comprise a RFID integrated circuit (e.g., an RFID chip). The RFID integrated circuit may comprise one or more memory (e.g., a non-volatile memory 210) in which commissioning data may be stored. Radio-frequency circuit 208 may be a passive RFID tag. Instead or in addition, commissioning data may be stored in memory 204. Memory 204 may be non-volatile. In some embodiments, RF device 126 may be a powered device (e.g., with a battery and/or with magnetic induction).

Memories 204, 210 may be a disk drive, flash drive, memory circuitry, or other memory device. Memories 204, 210 may store instructions that may include computer programs, firmware, or some other form of machine-readable instructions, including an operating system, utilities, drivers, network interfaces, applications, or some other type of software. Processor 202 may include other components such as a power management unit, a control interface unit, etc., which are omitted for clarity. Memories 204, 210 may store an identifier (e.g., a serial number).

Components of RF device 126 may be communicatively coupled and/or electrically connected to each other.

FIG. 3 is a diagram of an exemplary child device 302 (e.g., server 104, controller 106, or field device 112). Child device 302 may comprise one or more processor 304, one or more memory 306, input/output components 308, and one or more radio-frequency circuit 310. Radio-frequency circuit 310 may comprise a memory (e.g., a non-volatile memory 312). Radio-frequency circuit 310 may comprise one or more antenna 314. Input/output components 308 may comprise a camera or other optical device. Input/output components 308 may comprise a touchscreen display and/or trigger for initiating the reception or transmission of data. Input/output components 308 may permit the operation or configuration of child device 302 by a user. In some embodiments, input/output components 308 may comprise one or more sensor; one or more shafts; one or more motors; electrical outputs providing current and/or voltage, triode-thyristor outputs providing circuit completion for externally sourced and electrically actuated switching components; electrical inputs for measuring electrical voltages, currents, resistances, and digital counting; or electrical relay contacts. Input/output components 308 may comprise a wireless network interface, serial bus connector, and/or modem. Radio-frequency circuit 310 may be a circuit configured to receive and/or transmit data over a wireless-communication protocol such as an RFID protocol. Radio-frequency circuit 310 may comprise a RFID integrated circuit (e.g., an RFID chip). The RFID integrated circuit may comprise one or more memory (e.g., a non-volatile memory 312) in which commissioning data may be stored. Radio-frequency circuit 310 may be a passive RFID tag. Instead or in addition, commissioning data may be stored in memory 306. Memory 306 may be non-volatile. In some embodiments, child device 302 may be a powered device (e.g., with a battery and/or with magnetic induction).

Memories 306, 312 may be a disk drive, flash drive, memory circuitry, or other memory device. Memories 306, 312 may store instructions that may include computer programs, firmware, or some other form of machine-readable instructions, including an operating system, utilities, drivers, network interfaces, applications, or some other type of software. Processor 304 may include other components such as a power management unit, a control interface unit, etc., which are omitted for clarity. Memories 306, 312 may store an identifier (e.g., a serial number).

Components of child device 302 may be communicatively coupled and/or electrically connected to each other.

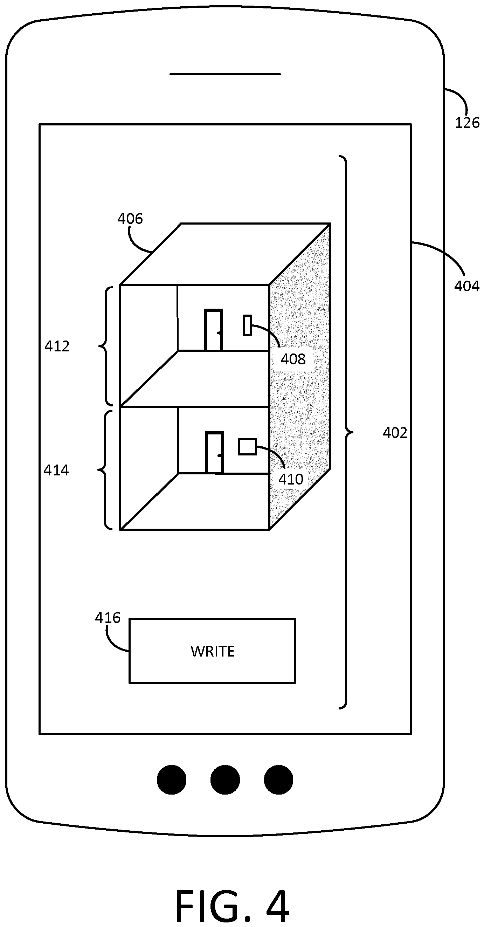

FIG. 4 illustrates an exemplary RF device 126 displaying a user interface 402 on screen 404. In some embodiments, RF device 126 may be a smartphone. A commissioner may use user interface 402 to initiate the writing of commissioning data to a child device. User interface 402 may display a model of building 406, in which a building-automation system is to be implemented. The building model may be stored in a Building Information Model (BIM) file. User interface 402 may allow the commissioner to select the displayed child device 408 and child device 410 and drag them into room 412 and room 414 to indicate that this is where child device 408 and child device 410 will be installed, respectively. In some embodiments, the BIM file will have child device 408 and child device 410 prepopulated in room 412 and room 414, respectively. When the commissioner is ready to transmit commissioning data associated with child device 408 to the RF circuit of child device 408, the commissioner may select child device 408 on user interface 402 and select write button 416. This may be done when, for example, the commissioner is holding RF device 126 within a distance of child device 412, wherein the distance is one over which the commissioning data may be successfully transmitted. In some embodiments, a commissioner may use RF device 126 to scan or capture an image (e.g., a barcode or QR code) on child device 408 or its package in order to select child device 408 for placement in user interface 402 or for writing to. In some embodiments, the commissioning data may be retrieved from server 104 or database 120 before RF device 126 displays user interface 402, when the commissioner selects child device 412, or when the commissioner selects write button 416. User interface 402 may display a notification if it receives an indication from child device 412 that the commissioning data was successfully transmitted. User interface 402 may display a notification if it receives an indication from child device 412 that the commissioning data was not successfully transmitted. User interface 402 may display a notification if it receives an indication from child device 412 that child device 412 is associated with the commissioning data or that the role of child device 412 is associated with the commissioning data. User interface 402 may display a notification if it receives an indication from child device 412 that child device 412 is not associated with the commissioning data or that the role of child device 412 is not associated with the commissioning data. For example, if commissioning data intended for a lighting controller is written to a heating-system controller, the controller may send a message warning the user of the incompatibility. The BIM file may associate the commissioning data (e.g., role data and/or network-configuration data) with child device 412. This association may occur when the file is created. This association may occur when RF device 126 receives the commissioning data, when the commissioner selects child device 412, or when the commissioner selects write button 412. Through this association specified in the BIM file, RF device 126 knows to write the commissioning data it has received to child device 412 as opposed to another device. Similarly, through this association specified in the BIM file, RF device 126 knows to write to child device 412 the associated commissioning data as opposed to another commissioning data.

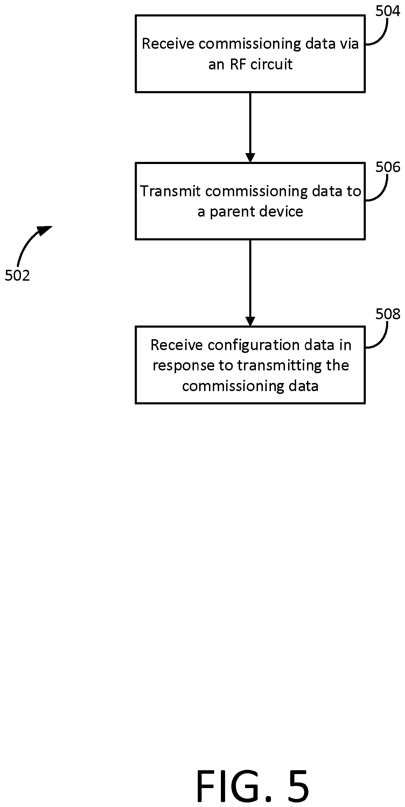

FIG. 5 is a flow chart illustrating an exemplary method 502 for wirelessly configuring a networked system for building automation. One or more steps of method 502 may be performed using RF device 126. One or more steps of method 502 may be performed by computer system 128. Method 502 may include, at step 504, receiving commissioning data via an RF circuit. Method 502 may further include, at step 506, transmitting the commissioning data to a parent device. Method 502 may further include, at step 508, receiving configuration data 122 in response to transmitting the commissioning data. The configuration data may be associated with the commissioning data. The system may operate based on at least the configuration data. The system may be a child device. The configuration data may include network-configuration data. The configuration data may include a control application. The commissioning data may include role data. The commissioning data may include network-configuration data. The commissioning data may be associated with the system in a BIM file.

Current system architectures require components to be powered by a wired energy source to receive data that is used to configure the components. This is a technical problem. Current systems require the commissioner to select the correct network-configuration data and the correct control application for each device and manually initiate the transfer of the data and/or application, which may be time consuming for a large number of devices. This is a technical problem. Current systems require the commissioner to wait for one component to finish receiving its data/application before transmitting other data/application to another component. This is a technical problem. An exemplary embodiment of the wirelessly configurable and networked system for building automation may comprise receiving commissioning data (e.g., role data and/or network-configuration data) via and RF circuit, transmitting the commissioning data to a parent device, and receiving configuration data (e.g., a control application and/or network configuration data) in response to transmitting the commissioning data. At least this foregoing combination of features comprises an architecture that serves as a technical solution to the foregoing technical problem. This technical solution is not routine, is unconventional, and is not well-understood in the field of building automation. This technical solution is a practical application of the exemplary architecture at least because it solves the foregoing technical problem and constitutes an improvement in the technical field of building automation at least by allowing the devices to receive data for configuring their operation without being powered by a wired source, allowing a commissioner to write commissioning data to a subset of devices in the building-automation system (e.g., a single device out of many) instead of all devices, and allowing the commissioner not to wait for the data transfer to one device to complete before proceeding to a subsequent device.

Another exemplary embodiment of the wirelessly configurable and networked system for building automation may comprise receiving commissioning data (e.g., role data and/or network-configuration data) via and RF circuit, receiving an identifier (e.g., a serial number) from a child device (the identifier being associated with the child device), receiving the configuration data (e.g., a control application and/or network configuration data) associated with the identifier, and transmitting the configuration data in response to receiving the identifier. At least this foregoing combination of features comprises an architecture that serves as a technical solution to the foregoing technical problem. This technical solution is not routine, is unconventional, and is not well-understood in the field of building automation. This technical solution is a practical application of the exemplary architecture at least because it solves the foregoing technical problem and constitutes an improvement in the technical field of building automation at least by allowing the devices to receive data for configuring their operation without being powered by a wired source, allowing a commissioner to write commissioning data to a subset of devices in the building-automation system (e.g., a single device out of many) instead of all devices, and allowing the commissioner not to wait for the data transfer to one device to complete before proceeding to a subsequent device.

Another exemplary embodiment of the wirelessly configurable and networked system for building automation may comprise receiving commissioning data (e.g., role data and/or network-configuration data) via and RF circuit, establishing a network connection to a parent device using the commissioning data, and receiving configuration data (e.g., a control application and/or network configuration data) in response to transmitting the commissioning data. At least this foregoing combination of features comprises an architecture that serves as a technical solution to the foregoing technical problem. This technical solution is not routine, is unconventional, and is not well-understood in the field of building automation. This technical solution is a practical application of the exemplary architecture at least because it solves the foregoing technical problem and constitutes an improvement in the technical field of building automation at least by allowing the devices to receive data for configuring their operation without being powered by a wired source, allowing a commissioner to write commissioning data to a subset of devices in the building-automation system (e.g., a single device out of many) instead of all devices, and allowing the commissioner not to wait for the data transfer to one device to complete before proceeding to a subsequent device.

Embodiments of the present disclosure may comprise a special purpose computer including a variety of computer hardware, as described in greater detail below.

Embodiments within the scope of the present disclosure also include computer-readable media for carrying or having computer-executable instructions or data structures stored thereon. Such computer-readable media can be any available media that can be accessed by a special purpose computer and comprises computer storage media and communication media. By way of example, and not limitation, computer storage media include both volatile and nonvolatile, removable and non-removable media implemented in any method or technology for storage of information such as computer-readable instructions, data structures, program modules or other data. Computer storage media are non-transitory and include, but are not limited to, random access memory (RAM), read only memory (ROM), electrically erasable programmable ROM (EEPROM), compact disk ROM (CD-ROM), digital versatile disks (DVD), or other optical disk storage, solid state drives (SSDs), magnetic cassettes, magnetic tape, magnetic disk storage, or other magnetic storage devices, or any other medium that can be used to carry or store desired non-transitory information in the form of computer-executable instructions or data structures and that can be accessed by a computer. When information is transferred or provided over a network or another communications connection (either hardwired, wireless, or a combination of hardwired or wireless) to a computer, the computer properly views the connection as a computer-readable medium. Thus, any such connection is properly termed a computer-readable medium. Combinations of the above should also be included within the scope of computer-readable media. Computer-executable instructions comprise, for example, instructions and data which cause a general-purpose computer, special purpose computer, or special purpose processing device to perform a certain function or group of functions.

The following discussion is intended to provide a brief, general description of a suitable computing environment in which aspects of the disclosure may be implemented. Although not required, aspects of the disclosure will be described in the general context of computer-executable instructions, such as program modules, being executed by computers in network environments. Generally, program modules include routines, programs, objects, components, data structures, etc. that perform particular tasks or implement particular abstract data types. Computer-executable instructions, associated data structures, and program modules represent examples of the program code means for executing steps of the methods disclosed herein. The particular sequence of such executable instructions or associated data structures represent examples of corresponding acts for implementing the functions described in such steps.

Those skilled in the art will appreciate that aspects of the disclosure may be practiced in network computing environments with many types of computer system configurations, including personal computers, hand-held devices, multi-processor systems, microprocessor-based or programmable consumer electronics, network PCs, minicomputers, mainframe computers, and the like. Aspects of the disclosure may also be practiced in distributed computing environments where tasks are performed by local and remote processing devices that are linked (either by hardwired links, wireless links, or by a combination of hardwired or wireless links) through a communications network. In a distributed computing environment, program modules may be located in both local and remote memory storage devices.

An exemplary system for implementing aspects of the disclosure includes a special purpose computing device in the form of a conventional computer, including a processing unit, a system memory, and a system bus that couples various system components including the system memory to the processing unit. The system bus may be any of several types of bus structures including a memory bus or memory controller, a peripheral bus, and a local bus using any of a variety of bus architectures. The system memory includes computer storage media, including nonvolatile and volatile memory types. A basic input/output system (BIOS), containing the basic routines that help transfer information between elements within the computer, such as during start-up, may be stored in ROM. Further, the computer may include any device (e.g., computer, laptop, tablet, PDA, cell phone, mobile phone, a smart television, and the like) that is capable of receiving or transmitting an IP address wirelessly to or from the internet.

The computer may also include a magnetic hard disk drive for reading from and writing to a magnetic hard disk, a magnetic disk drive for reading from or writing to a removable magnetic disk, and an optical disk drive for reading from or writing to removable optical disk such as a CD-ROM or other optical media. The magnetic hard disk drive, magnetic disk drive, and optical disk drive are connected to the system bus by a hard disk drive interface, a magnetic disk drive-interface, and an optical drive interface, respectively. The drives and their associated computer-readable media provide nonvolatile storage of computer-executable instructions, data structures, program modules, and other data for the computer. Although the exemplary environment described herein employs a magnetic hard disk, a removable magnetic disk, and a removable optical disk, other types of computer readable media for storing data can be used, including magnetic cassettes, flash memory cards, digital video disks, Bernoulli cartridges, RAMs, ROMs, SSDs, and the like.

Communication media typically embody computer readable instructions, data structures, program modules or other data in a modulated data signal such as a carrier wave or other transport mechanism and includes any information delivery media.

Program code means comprising one or more program modules may be stored on the hard disk, magnetic disk, optical disk, ROM, and/or RAM, including an operating system, one or more application programs, other program modules, and program data. A user may enter commands and information into the computer through a keyboard, pointing device, or other input device, such as a microphone, joy stick, game pad, satellite dish, scanner, or the like. These and other input devices are often connected to the processing unit through a serial port interface coupled to the system bus. Alternatively, the input devices may be connected by other interfaces, such as a parallel port, a game port, or a universal serial bus (USB). A monitor or another display device is also connected to the system bus via an interface, such as a video adapter. In addition to the monitor, personal computers typically include other peripheral output devices (not shown), such as speakers and printers.

One or more aspects of the disclosure may be embodied in computer-executable instructions (i.e., software), routines, or functions stored in system memory or nonvolatile memory as application programs, program modules, and/or program data. The software may alternatively be stored remotely, such as on a remote computer with remote application programs. Generally, program modules include routines, programs, objects, components, data structures, etc. that perform particular tasks or implement particular abstract data types when executed by a processor in a computer or other device. The computer executable instructions may be stored on one or more tangible, non-transitory computer readable media (e.g., hard disk, optical disk, removable storage media, solid state memory, RAM, etc.) and executed by one or more processors or other devices. As will be appreciated by one of skill in the art, the functionality of the program modules may be combined or distributed as desired in various embodiments. In addition, the functionality may be embodied in whole or in part in firmware or hardware equivalents such as integrated circuits, application specific integrated circuits, field programmable gate arrays (FPGA), microcontrollers, and the like.

The computer may operate in a networked environment using logical connections to one or more remote computers. The remote computers may each be another personal computer, a tablet, a PDA, a server, a router, a network PC, a peer device, or other common network node, and typically include many or all the elements described above relative to the computer. The logical connections include a local area network (LAN) and a wide area network (WAN) that are presented here by way of example and not limitation. Such networking environments are commonplace in office-wide or enterprise-wide computer networks, intranets and the Internet.

When used in a LAN networking environment, the computer is connected to the local network through a network interface or adapter. When used in a WAN networking environment, the computer may include a modem, a wireless link, or other means for establishing communications over the wide area network, such as the Internet. The modem, which may be internal or external, is connected to the system bus via the serial port interface. In a networked environment, program modules depicted relative to the computer, or portions thereof, may be stored in the remote memory storage device. It will be appreciated that the network connections shown are exemplary and other means of establishing communications over wide area network may be used.

Preferably, computer-executable instructions are stored in a memory, such as the hard disk drive, and executed by the computer. Advantageously, the computer processor has the capability to perform all operations (e.g., execute computer-executable instructions) in real-time.

The order of execution or performance of the operations in embodiments of the disclosure illustrated and described herein is not essential, unless otherwise specified. That is, the operations may be performed in any order, unless otherwise specified, and embodiments of the disclosure may include additional or fewer operations than those disclosed herein. For example, it is contemplated that executing or performing a particular operation before, contemporaneously with, or after another operation is within the scope of aspects of the present invention as claimed.

Embodiments of the disclosure may be implemented with computer-executable instructions. The computer-executable instructions may be organized into one or more computer-executable components or modules. Aspects of the disclosure may be implemented with any number and organization of such components or modules.

When introducing elements of aspects of the disclosure or the embodiments thereof, the articles "a", "an", "the" and "said" are intended to mean that there are one or more of the elements. The terms "comprising", "including", and "having" are intended to be inclusive and mean that there may be additional elements other than the listed elements. Having described aspects of the disclosure in detail, it will be apparent that modifications and variations are possible without departing from the scope of aspects of the disclosure as defined in the appended claims.

## Claims

1. A wirelessly configurable and networked system for building automation, the system being a first child device comprising:
a processor (304) included in the first child device (302);
a radio-frequency, RF, circuit (310) included in the first child device and configured to receive an RF signal using a wireless-communication protocol, the RF circuit comprising an antenna (314); and
a memory (306) included in the first child device and storing instructions that, when executed by the processor, cause the processor to:
receive commissioning data via the RF circuit, wherein the commissioning data is associated with the system,
receive an identifier from a second child device, wherein the identifier is associated with the second child device,
receive configuration data associated with the identifier, and
transmit the configuration data in response to receiving the identifier, wherein the second child device operates based on at least the configuration data.

2. The first child device for building automation of claim 1, wherein the configuration data comprises one or more of network-configuration data and a control application.

3. The first child device for building automation of claim 1, wherein the commissioning data is associated with the system in a Building Information Management file.

4. The first child device for building automation of claim 1, wherein the wireless communication protocol comprises an RF-identification protocol.

5. The first child device for building automation of claim 1, wherein the first child device comprises a building-automation controller and the second child device comprises a building-automation controller.

6. The first child device for building automation of claim 1, wherein the identifier comprises a serial number.

7. A non-transitory computer-readable medium storing a set of instructions to be executed by at least one processor to control a system, the system being a first child device (302) comprising a processor (304) included in the first child device, a radio-frequency, RF, circuit (310) included in the first child device and configured to receive an RF signal using a wireless-communication protocol, the RF circuit comprising an antenna (314), the instructions, when executed by the at least one processor, cause the at least one processor to perform a method comprising:
receiving commissioning data via the RF circuit, the commissioning data being associated with the first child device;
receiving an identifier from a second child device, wherein the identifier is associated with the second child device,
receiving configuration data associated with the identifier; and
transmitting the configuration data in response to receiving the identifier, wherein the second child device operates based on at least the configuration data.

8. The non-transitory computer-readable medium of claim 7, wherein the configuration data comprises one or more of network-configuration data and a control application.

9. The non-transitory computer-readable medium of claim 7, wherein the commissioning data is associated with the first child device in a Building Information Management file.

10. The non-transitory computer-readable medium of claim 7, wherein the wireless communication protocol comprises an RF-identification protocol.

11. The non-transitory computer-readable medium of claim 7, wherein the method further includes transmitting the commissioning data to a parent device, and wherein the first child device comprises a building-automation controller and the parent device comprises at least one of a server or a building-automation controller.

12. The non-transitory computer-readable medium of claim 7, wherein the system is a parent device.

## Patentansprüche

1. Ein drahtlos konfigurierbares und vernetztes System zur Gebäudeautomation, wobei das System eine erste untergeordnete Vorrichtung ist, beinhaltend:
einen Prozessor (304), der in der ersten untergeordneten Vorrichtung (302) enthalten ist;
eine Radiofrequenz-, RF-, Schaltung (310), die in der ersten untergeordneten Vorrichtung enthalten und so konfiguriert ist, dass sie ein RF-Signal unter Verwendung eines Drahtloskommunikationsprotokolls empfängt, wobei die RF-Schaltung eine Antenne (314) beinhaltet; und
einen Speicher (306), der in der ersten untergeordneten Vorrichtung enthalten ist und Anweisungen speichert, die, wenn sie von dem Prozessor ausgeführt werden, den Prozessor zu Folgendem veranlassen:
Empfangen von Inbetriebnahmedaten über die RF-Schaltung, wobei die Inbetriebnahmedaten mit dem System assoziiert sind,
Empfangen einer Kennung von einer zweiten untergeordneten Vorrichtung, wobei die Kennung mit der zweiten untergeordneten Vorrichtung assoziiert ist,
Empfangen von Konfigurationsdaten, die mit der Kennung assoziiert sind, und Übertragen der Konfigurationsdaten als Reaktion auf das Empfangen der Kennung, wobei die zweite untergeordnete Vorrichtung basierend auf mindestens den Konfigurationsdaten arbeitet.

2. Erste untergeordnete Vorrichtung zur Gebäudeautomation gemäß Anspruch 1, wobei die Konfigurationsdaten eines oder mehrere von Netzwerk-Konfigurationsdaten und einer Steueranwendung beinhalten.

3. Erste untergeordnete Vorrichtung zur Gebäudeautomation gemäß Anspruch 1, wobei die Inbetriebnahmedaten mit dem System in einer Gebäudeinformationsverwaltungsdatei assoziiert sind.

4. Erste untergeordnete Vorrichtung zur Gebäudeautomation gemäß Anspruch 1, wobei das Drahtloskommunikationsprotokoll ein RF-Identifikationsprotokoll beinhaltet.

5. Erste untergeordnete Vorrichtung zur Gebäudeautomation gemäß Anspruch 1, wobei die erste untergeordnete Vorrichtung eine Steuereinheit für die Gebäudeautomation beinhaltet und die zweite untergeordnete Vorrichtung eine Steuereinheit für die Gebäudeautomation beinhaltet.

6. Erste untergeordnete Vorrichtung zur Gebäudeautomation gemäß Anspruch 1, wobei die Kennung eine Seriennummer beinhaltet.

7. Ein nicht transitorisches computerlesbares Medium, das einen Satz von Anweisungen speichert, die von mindestens einem Prozessor auszuführen sind, um ein System zu steuern, wobei das System eine erste untergeordnete Vorrichtung (302) ist, beinhaltend einen Prozessor (304), der in der ersten untergeordneten Vorrichtung enthalten ist, eine Radiofrequenz-, RF-, Schaltung (310), die in der ersten untergeordneten Vorrichtung enthalten und so konfiguriert ist, dass sie ein RF-Signal unter Verwendung eines Drahtloskommunikationsprotokolls empfängt, wobei die RF-Schaltung eine Antenne (314) beinhaltet, wobei die Anweisungen, wenn sie von dem mindestens einen Prozessor ausgeführt werden, den mindestens einen Prozessor veranlassen, ein Verfahren durchzuführen, das Folgendes beinhaltet:
Empfangen von Inbetriebnahmedaten über die RF-Schaltung, wobei die Inbetriebnahmedaten mit der ersten untergeordneten Vorrichtung assoziiert sind;
Empfangen einer Kennung von einer zweiten untergeordneten Vorrichtung, wobei die Kennung mit der zweiten untergeordneten Vorrichtung assoziiert ist,
Empfangen von Konfigurationsdaten, die mit der Kennung assoziiert sind; und
Übertragen der Konfigurationsdaten als Reaktion auf das Empfangen der Kennung, wobei die zweite untergeordnete Vorrichtung basierend auf mindestens den Konfigurationsdaten arbeitet.

8. Nicht transitorisches computerlesbares Medium gemäß Anspruch 7, wobei die Konfigurationsdaten eines oder mehrere von Netzwerk-Konfigurationsdaten und einer Steueranwendung beinhalten.

9. Nicht transitorisches computerlesbares Medium gemäß Anspruch 7, wobei die Inbetriebnahmedaten mit der ersten untergeordneten Vorrichtung in einer Gebäudeinformationsverwaltungsdatei assoziiert sind.

10. Nicht transitorisches computerlesbares Medium gemäß Anspruch 7, wobei das Drahtloskommunikationsprotokoll ein RF-Identifikationsprotokoll beinhaltet.

11. Nicht transitorisches computerlesbares Medium gemäß Anspruch 7, wobei das Verfahren ferner das Übertragen der Inbetriebnahmedaten an eine übergeordnete Vorrichtung enthält und wobei die erste untergeordnete Vorrichtung eine Steuereinheit für die Gebäudeautomation beinhaltet und die übergeordnete Vorrichtung mindestens eines von einem Server oder einer Steuereinheit für die Gebäudeautomation beinhaltet.

12. Nicht transitorisches computerlesbares Medium gemäß Anspruch 7, wobei das System eine übergeordnete Vorrichtung ist.

## Revendications

1. Un système configurable sans fil et en réseau pour l'immotique, le système étant un premier dispositif enfant comprenant :
un processeur (304) inclus dans le premier dispositif enfant (302) ;
un circuit radiofréquence, RF, (310) inclus dans le premier dispositif enfant et configuré pour recevoir un signal RF en utilisant un protocole de communication sans fil, le circuit RF comprenant une antenne (314) ; et
une mémoire (306) incluse dans le premier dispositif enfant et stockant des instructions qui, lorsqu'elles sont exécutées par le processeur, amènent le processeur :
à recevoir des données de mise en service par l'intermédiaire du circuit RF, les données de mise en service étant associées au système,
à recevoir un identifiant en provenance d'un deuxième dispositif enfant, l'identifiant étant associé au deuxième dispositif enfant,
à recevoir des données de configuration associées à l'identifiant, et
à transmettre les données de configuration en réponse à la réception de l'identifiant, dans lequel le deuxième dispositif enfant fonctionne sur la base au moins des données de configuration.

2. Le premier dispositif enfant pour l'immotique de la revendication 1, dans lequel les données de configuration comprennent un ou plusieurs éléments parmi des données de configuration de réseau et une application de commande.

3. Le premier dispositif enfant pour l'immotique de la revendication 1, dans lequel les données de mise en service sont associées au système dans un fichier de Bâti Immobilier Modélisé (*Building Information Management*)*.*

4. Le premier dispositif enfant pour l'immotique de la revendication 1, dans lequel le protocole de communication sans fil comprend un protocole d'identification RF.

5. Le premier dispositif enfant pour l'immotique de la revendication 1, le premier dispositif enfant comprenant une unité de commande immotique et le deuxième dispositif enfant comprenant une unité de commande immotique.

6. Le premier dispositif enfant pour l'immotique de la revendication 1, dans lequel l'identifiant comprend un numéro de série.

7. Un support non transitoire lisible par ordinateur stockant un ensemble d'instructions devant être exécutées par au moins un processeur afin de commander un système, le système étant un premier dispositif enfant (302) comprenant un processeur (304) inclus dans le premier dispositif enfant, un circuit radiofréquence, RF, (310) inclus dans le premier dispositif enfant et configuré pour recevoir un signal RF en utilisant un protocole de communication sans fil, le circuit RF comprenant une antenne (314), les instructions, lorsqu'elles sont exécutées par l'au moins un processeur, amenant l'au moins un processeur à effectuer un procédé comprenant :
la réception de données de mise en service par l'intermédiaire du circuit RF, les données de mise en service étant associées au premier dispositif enfant ;
la réception d'un identifiant en provenance d'un deuxième dispositif enfant, l'identifiant étant associé au deuxième dispositif enfant,
la réception de données de configuration associées à l'identifiant ; et
la transmission des données de configuration en réponse à la réception de l'identifiant, dans lequel le deuxième dispositif enfant fonctionne sur la base au moins des données de configuration.

8. Le support non transitoire lisible par ordinateur de la revendication 7, dans lequel les données de configuration comprennent un ou plusieurs éléments parmi des données de configuration de réseau et une application de commande.

9. Le support non transitoire lisible par ordinateur de la revendication 7, dans lequel les données de mise en service sont associées au premier dispositif enfant dans un fichier de Bâti Immobilier Modélisé.

10. Le support non transitoire lisible par ordinateur de la revendication 7, dans lequel le protocole de communication sans fil comprend un protocole d'identification RF.

11. Le support non transitoire lisible par ordinateur de la revendication 7, dans lequel le procédé inclut en outre la transmission des données de mise en service à un dispositif parent, et dans lequel le premier dispositif enfant comprend une unité de commande immotique et le dispositif parent comprend au moins un élément parmi un serveur ou une unité de commande immotique.

12. Le support non transitoire lisible par ordinateur de la revendication 7, dans lequel le système est un dispositif parent.
